Europäisches Patentamt

European Patent Office

Office européen des brevets

(19)

(11) Numéro de publication: **0 153 207**
**B1**

(12) **FASCICULE DE BREVET EUROPEEN**

(45) Date de publication du fascicule du brevet: 31.08.88

(51) Int. Cl.⁴: **F 02 B 37/12**

(21) Numéro de dépôt: **85400079.1**

(22) Date de dépôt: **17.01.85**

(54) **Perfectionnements aux moteurs à combustion interne suralimentés, à conduit de dérivation et chambre de combustion auxiliaire, munis d'un système de régulation.**

(30) Priorité: **30.01.84 FR 8401355**

(43) Date de publication de la demande:
**28.08.85 Bulletin 85/35**

(45) Mention de la délivrance du brevet:
**31.08.88 Bulletin 88/35**

(84) Etats contractants désignés:
**AT BE CH DE GB IT LI LU SE**

(56) Documents cités:
**CH-A- 359 319**
**FR-A-2 284 766**
**FR-A-2 363 003**

(73) Titulaire: **ETAT-FRANCAIS représenté par le DELEGUE GENERAL POUR L'ARMEMENT Bureau des Brevets et Inventions de la Délégation Générale pour l'Armement 14, rue Saint-Dominique**
**F-75997 Paris Armées (FR)**

(72) Inventeur: **Melchior, Jean**
**126 Boulevard du Montparnasse**
**F-75014 Paris (FR)**
Inventeur: **Andre-Talamon, Thierry**
**7 Quai Voltaire**
**F-75007 Paris (FR)**
Inventeur: **Dourille, Alain**
**8 rue Allée des Noisetiers**
**F-78310 Elancourt (FR)**

(74) Mandataire: **Bernasconi, Jean et al**
**Cabinet Michel Lemoine 13 Boulevard des Batignolles**
**F-75008 Paris (FR)**

Courier Press, Leamington Spa, England.

# Description

L'invention a pour objet un moteur à combustion interne, à chambres de travail de volume variable, suralimenté par un turbocompresseur dont la sortie d'air du compresseur communique avec l'entrée d'air des chambres de travail, ledit compresseur étant entraîné par une turbine dont l'entrée de gaz est reliée à la sortie de gaz des chambres de travail par l'intermédiaire d'au moins un collecteur d'échappement, lequel moteur comporte un conduit de dérivation faisant communiquer la sortie d'air du compresseur avec l'entrée de gaz de la turbine par l'intermédiaire d'une chambre de combustion auxiliaire qui est divisée d'amont en aval en une zone primaire de combustion et en une zone secondaire de dilution et dont la sortie de gaz communique avec l'entrée de la turbine, ladite zone primaire comportant au moins une buse d'alimentation en combustible reliée à une source de combustible sous pression par l'intermédiaire de moyens de régulation du débit de combustible admis par ladite buse, ces moyens étant sensibles à un paramètre de fonctionnement du moteur.

De plus, le susdit conduit de dérivation est de préférence, mais non exclusivement, muni de moyens d'étranglement à section de passage variable. En outre, le susdit moteur à combustion interne est de préférence, mais non exclusivement, un moteur Diesel et ses chambres de travail sont en général constituées par des cylindres dont le volume est rendu variable par le déplacement de pistons. Néammoins, l'invention est applicable, en tout ou en partie, aux moteurs à allumage commandé, notamment aux moteurs à gaz.

Un tel moteur est décrit par exemple dans le FR—A—2.449.785 (Motoren- und Turbinen-Union, M.T.U.). Dans ce cas, les moyens de régulation du débit, qui sont sensibles à la température des gaz immédiatement en amont de leur entrée dans la turbine, c'est-à-dire à la température du mélange des gaz d'échappement du moteur et des gaz de combustion de la chambre de combustion auxiliaire, sont agencés de façon à réduire la quantité de combustible fournie à cette chambre lorsque ladite température dépasse un seuil déterminé. Comme la chambre de combustion auxiliaire travaille alors avec un grand excès d'air, la température des gaz produits diminuierait ainsi, ce qui protégerait la turbine contre les risques de surchauffe.

Un moteur, muni des moyens de régulation semblables, est décrit dans le US—A—3.163.984 (Dumont).

L'invention a pour but de faire en sorte que soient protégés contre les risques de surchauffe, non seulement la turbine du turbocompresseur, mais encore et surtout le moteur à combustion interne lui-même, lequel est tout aussi sensible, sinon plus, que la turbine à ces risques.

Pour atteindre ce but, le moteur conforme à l'invention, dans lequel les susdits moyens de régulation sont agencés de manière à agir dans le sens de l'augmentation du débit de combustible, jusqu'à une valeur maximale, si au moins un paramètre lié à la charge thermique du moteur dépasse un seuil déterminé à l'avance ($T_{MAX}$) et dans le sens de la réduction du débit de combustible, jusqu'à une valeur minimale qui peut être nulle, si ledit paramètre caractéristique descend au-dessous dudit seuil ($T_{MAX}$), est essentiellement caractérisé en ce que ledit paramètre est constitué par l'un des suivants:

a) la température des gaz régnant soit à la sortie des chambres de travail du moteur, soit en au moins un pont du ou des collecteurs d'échappement, en amont de la jonction entre le conduit de dérivation et l'entrée des gaz de la turbine;

b) la température d'une ou plusieurs pièces considérées comme critiques pour le bon fonctionnement du moteur (par exemple la température du siège des soupapes d'échappement ou du haut de chemise des cylindres), l'information recueillie pouvant être traitée par des moyens de calcul électroniques connus pour agir de façon appropriée en temps réel sur le débit de combustible dans la chambre de combustion auxiliaire et pour tenir compte notamment des inerties thermiques propres à la mesure;

c) un indice caractéristique de la composition chimique des gaz de combustion quittant les chambres de travail du moteur, en amont du carrefour de la communication du conduit de dérivation avec l'entrée de gaz de la turbine; cet indice peut être en particulier l'opacité de ces gaz de combustion.

Selon une variante, les susdits moyens sont agencés de manière à agir dans le sens de l'augmentation et de la réduction du débit du combustible non pas respectivement lorsque le susdit paramètre dépasse ou descend au-dessous du susdit seuil mais lorsque ce paramètre a tendance à dépasser ou à descendre au-dessous de ce seuil.

On comprendra par l'expression "tendance à" le fait qu'il n'est pas nécessaire d'attendre que la valeur mesurée ait dépassé la valeur de seuil pour corriger ou prévenir l'effet de ce dépassement, mais que l'on peut anticiper cette réaction, par exemple en prenant en compte de façon connue la dérivée dans le temps d'ordre "n" de l'écart entre ces deux valeurs.

Par une solution inverse des solutions connues qui ont été rappelées ci-dessus, c'est-à-dire par une augmentation du débit de combustible au lieu d'une diminution dans des circonstances analogues l'invention permet de protéger à la fois la turbine et le moteur, ce qui met en évidence l'activité inventive de la présente invention. La solution apportée par celle-ci est issue de la constatation qu'une turbine de turbocompresseur est "automatiquement protégée par son compresseur". En effet, la température à l'entrée de la turbine, qui est l'image de l'énergie des gaz pénétrant dans la turbine, est fonction de la pression d'air délivrée par le compresseur. Du fait de l'existence du conduit de dérivation, cette fonction peut être biunivoque. En d'autres termes, si l'énergie entrant dans la turbine subit un accroissement (provenant soit du moteur, soit de la chambre de combustion auxiliaire) en provoquant un accroissement momentané de la température devant la turbine, ceci accélère la turbine et par conséquent le compresseur, et élève donc la pression d'air, ce qui vient augmenter le rapport des masses entre l'air et le combustible dans le moteur et/ou la chambre de combustion auxiliaire et par conséquent vient modérer dans des limites acceptables l'accroissement de la température devant la turbine. En ce qui concerne le moteur lui-même, son échauffement dépend du rapport entre le débit d'air et le débit de combustible qu'il reçoit, c'est-à-dire du rapport entre la pression de l'air de suralimentation et le couple développé par le moteur. Si l'échauffement de celui-ci est excessif, ceci signifie donc que sa pression de suralimentation est insuffisante, pour un couple donné, et il est remédié à cette insuffisance, conformément à l'invention, par une augmentation du débit de combustible admis dans la chambre de combustion auxiliaire. En définitive, l'invention protège le moteur des risques de surchauffe et laisse la turbine sous la protection naturelle du compresseur, ce qui a été explicité plus haut.

Au contraire, dans la solution connue évoquée ci-dessus (MTU, Dumont), il est tout à fait possible d'être dans une situation où la température des gaz, à l'entrée de la turbine et en aval de la jonction avec le conduit de dérivation sera en deçà des valeurs limites acceptables, du fait de la dilution des gaz d'échappement du moteur par l'air frais circulant dans le conduit de dérivation, alors que les gaz d'échappement du moteur, en amont de cette jonction, ce qui est symptomatique d'une surcharge thermique du moteur, dépassera les valeurs admissibles, compte tenu du couple développé par celui-ci et de la pression d'air de suralimentation disponible.

Il est à noter que le FR—A—2.284.766 (Etat Francais) décrit un moteur conforme au préambule de la revendication 1 et comprenant des moyens de régulation propres à empêcher le rapport massique entre l'air et le combustible admis au moteur de descendre au-dessous de la valeur pour laquelle la température maximum atteinte par les gaz dans les cylindres du moteur devient inacceptable en asservissant la valeur du seuil minimal de la pression de suralimentation à la quantité de combustible injectée dans le moteur par cycle, mais ces moyens, qui sont liés à la charge thermique du moteur, sont manifestement différents de ceux de l'invention. En agissant sur la quantité de combustible injectée par cycle, ces moyens se sont avérés délicats dans leur usage et difficiles à réaliser. En effet, la quantité de combustible injecté par cycle est une paramètre de fonctionnement du moteur essentiellement variable. Sa variation peut être très rapide et les moyens pour la mesurer sont généralement délicats à mettre en oeuvre. Asservir ce paramètre très variable à la valeur du seuil minimal de la pression de suralimentation ne suffit pas à empêcher la surcharge thermique momentanée du moteur du fait du temps de réponse de la suralimentation, temps de réponse important du fait de l'inertie mécanique du turbo-compresseur: Asservir un paramètre de fonctionnement très rapidement variable à un paramètre de fonctionnement généralement lent pose un problème de mise en oeuvre et de réglage très difficile. De plus la quantité de combustible injectée par cycle, pour que le moteur fournisse un couple donné, dépend de la vitesse de celui-ci: l'intervention de ce paramètre supplémentaire, également très rapidement variable, rend très difficile la mise en oeuvre des moyens en question.

L'invention va être maintenant décrite plus en détail à l'aide des dessins annexés qui en illustrent schématiquement des modes de réalisation préférés.

La figure 1 de ces dessins représente schématiquement un moteur à combustion interne agencé conformément à un premier mode de réalisation.

La figure 2 représente, par une vue analogue à la figure 1, un moteur à combustion interne agencé conformément à un deuxième mode de réalisation.

La figure 3 représente, schématiquement, certains des éléments d'un moteur à combustion interne établi selon une variante du mode de réalisation de la figure 2.

La figure 4 représente, par une vue schématique simplifiée un moteur à combustion interne agencé conformément à un troisième mode de réalisation.

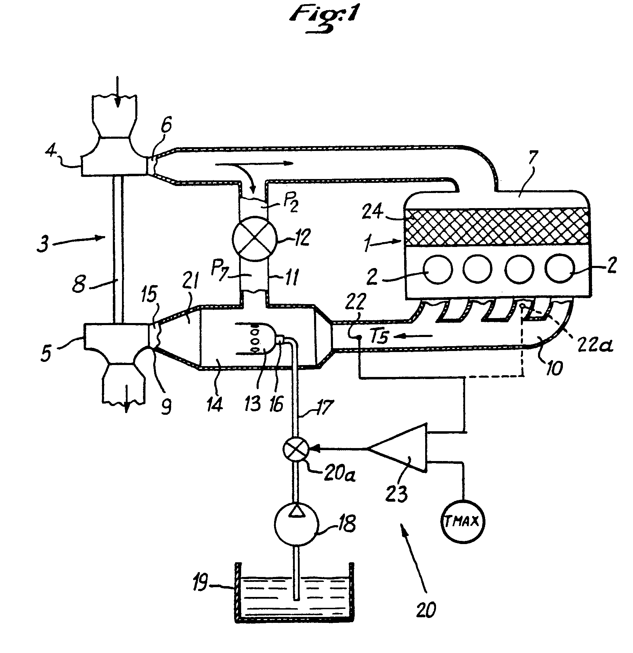

Le moteur Diesel suralimenté 1, qui est représenté à la figure 1, comprend des chambres de travail 2 de volume variable constituées en général chacune par un cylindre dont le volume est rendu variable par le déplacement d'un piston. Ce moteur 1 est suralimenté par un groupe turbo-compresseur 3 essentiellement constitué d'un turbine 5 et d'un compresseur 4 dont la sortie 6 communique avec l'entrée d'air des chambres de travail 2, par l'intermédiaire d'au moins un collecteur d'admission 7. Un refroidisseur d'air de suralimentation 24 est généralement disposé en amont de ce collecteur d'admission 7. Le compresseur 4 est entraîné mécaniquement, par example par l'intermédiaire d'un arbre 8, par la turbine 5 dont l'entrée de gaz 9 est reliée à la sortie de gaz des chambres de travail 2 par l'intermédiaire d'au moins un collecteur d'échappement 10.

Le moteur 1 comporte un conduit de dérivation 11, muni de préférence, mais non exclusivement, de moyens d'étranglement 12 à section de passage variable, qui fait communiquer la sortie d'air 6 du compresseur 4 avec l'entrée de gaz 9 de la turbine 5 par l'intermédiaire d'une chambre de combustion auxiliaire 14 qui est divisée d'amont en aval en une zone primaire de combustion 13 et en une zone secondaire de dilution 21. Cette chambre de combustion auxiliaire 14 comporte une sortie de gaz 15 qui communique avec l'entrée de gaz 9 de la turbine 5. La zone primaire de combustion 13 comporte au moins une buse d'alimentation en combustible 16 qui est reliée par une canlisation 17 à une source de combustible sous pression 18 (telle qu'une pompe puisant le combustible dans un réservoir 19) par l'intermédiaire de moyens de régulation du débit de combustible 20, ces moyens 20 étant sensibles à un paramètre de fonctionnement du moteur. Ces moyens 20 comportent, de façon connue en soi, un dispositif 20a de réglage du débit de combustible, qui peut être un ajutage de section de passage variable ou un ajutage à temps d'ouverture cyclique variable ou tout autre moyen connu équivalent.

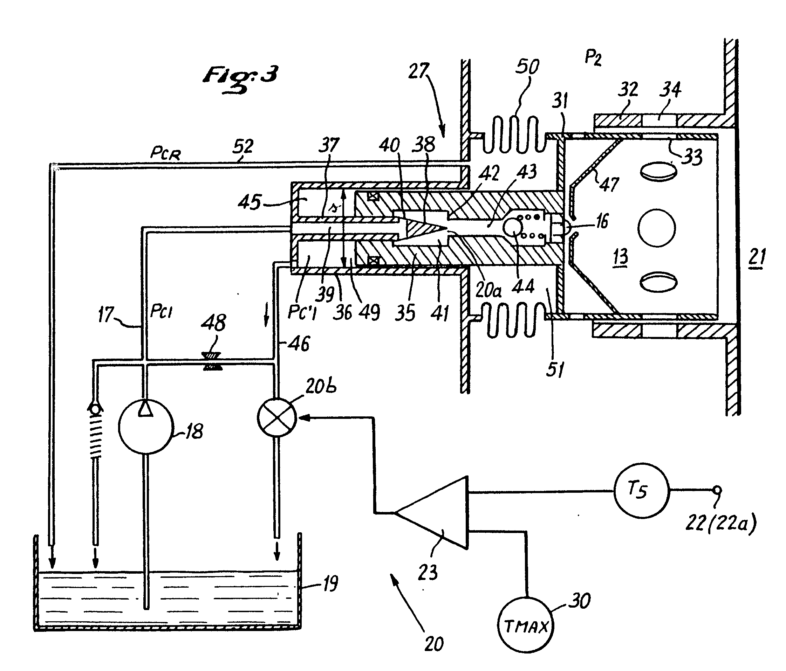

Les moyens d'étranglement 12 et la chambre de combustion auxiliaire 14 sont de préférence agencés conformément au FR—A—2.472.082. En particulier, les moyens d'étranglement 12 sont de préférence agencés de façon à établir une baisse de pression $P_2$—$P_7$ ($P_2$ et $P_7$ étant les pressions régnant respectivement en amont et en aval des moyens d'étranglement 12) qui est pratiquement indépendante du rapport entre le débit d'air dans le conduit de dérivation 11 et le débit d'air délivré par le compresseur 4 mais qui varie dans le même sens que la susdite pression $P_2$. La zone secondaire de dilution 21 se termine par la sortie de gaz 15. A l'aide de moyens d'étranglement (non représentés à la figure 1 mais dont un exemple sera décrit en référence à la figure 3), le débit d'air introduit dans la chambre de combustion auxiliaire 14 est réparti entre les zones primaire 13 et secondaire 21 de façon à adapter le débit d'air admis dans la zone primaire 13 au débit de combustible introduit par la buse d'alimentation 16. On pourra se reporter au FR—A—2.472.082 ainsi qu'à divers autres brevets de l'Etat Francais pour obtenir plus de détails sur les moyens d'étranglement 12 et la chambre de combustion auxiliaire 14.

Cela étant, en vue de protéger contre les risques de surchauffe à la fois le moteur 1 et la turbine 5, le moteur 1 est essentiellement caractérisé en ce que les moyens de régulation 20 sont agencés de manière à agir dans le sens de l'augmentation du débit de combustible fourni par la buse d'alimentation 16, jusqu'à une valeur maximale, si un paramètre caractéristique de la charge thermique du moteur 1 dépasse ou a tendance à dépasser un seuil déterminé à l'avance ($T_{MAX}$) et dans le sens de la réduction de ce débit de combustible jusqu'à une valeur minimale, si ledit paramètre caractéristique descend ou a tendance à descendre au-dessous dudit seuil ($T_{MAX}$).

Le susdit paramètre de fonctionnement du moteur qui, selon le FR—A—2.449.785 commenté ci-dessus, est la température des gaz immédiatement en amont de leur entrée dans la turbine est constitué, selon l'invention, par un paramètre caractéristique de la charge thermique du moteur 1, ce dernier paramètre étant en général aussi une température mais mesurée en un autre emplacement du moteur, de préférence à la sortie de gaz des chambres de travail 2, en amont du carrefour de la communication du conduit de dérivation 11 avec l'entrée de gaz 9 de la turbine 5.

Deux possibilités sont illustrées à la figure 1 en ce qui concerne ce paramètre caractéristique de la charge thermique du moteur. On peut utiliser à cet effet soit une sonde de température 22 placée en un point du collecteur d'échappement 10 pour y mesurer la température $T_5$ (comme représenté en trait plein à la figure 1), soit une sonde de température 22a placée à la sortie de l'une au moins des chambres de travail 2 du moteur 1 (comme représenté en trait interrompu à la figure 1). Selon une variante (non représentée), on pourrait d'ailleurs aussi placer une telle sonde de température sur une ou plusieurs pièces du moteur convenablement choisies par exemple le siège des soupapes d'échappement (placées entre chacune des chambres de travail 2 et le collecteur d'échappement 10) ou la chemise de refroidissement des cylindres des chambres de travail 2. L'information recueillie par cette ou ces sondes de température telles que 22 ou 22a est traitée par des moyens de calcul électroniques connus 23, de façon à agir sur le débit de combustible introduit dans la chambre de combustion auxiliaire 14. A la figure 1, on a schématisé ces moyens de calcul 23 par un comparateur dont les deux entrées reçoivent respectivement l'information de la ou des sondes telles que 22 ou 22a et une information représentative du seuil $T_{MAX}$ et dont la sortie envoie un signal de commande vers le dispositif de réglage du débit de combustible 20a.

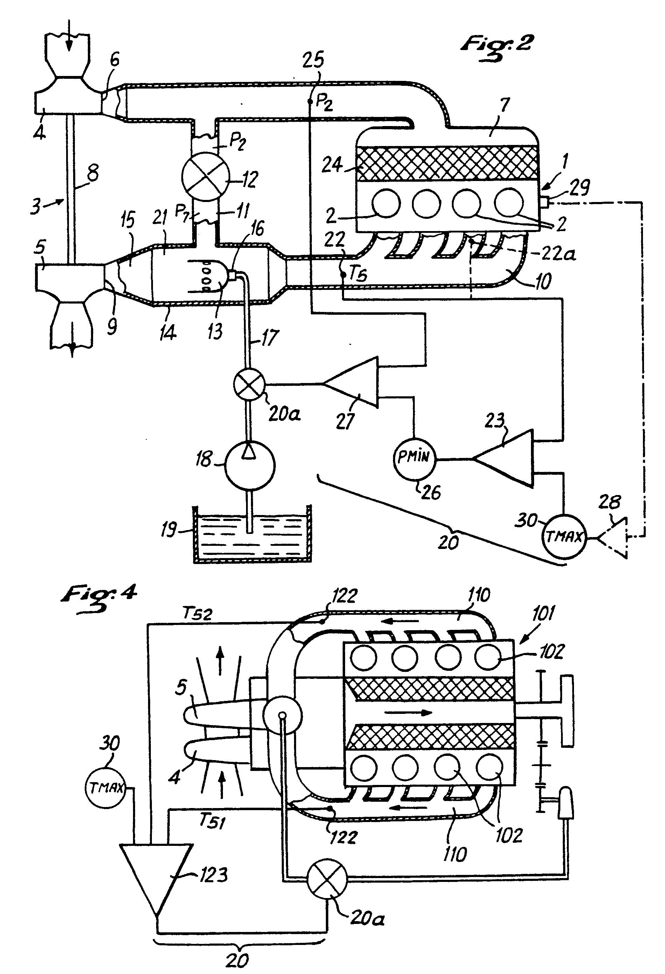

A la figure 2, on a représenté un deuxième mode de réalisation dont les éléments analogues à ceux du mode de réalisation précédent sont désignés par les mêmes nombres et lettres de référence et ne seront pas décrits à nouveau. Dans ce deuxième mode de réalisation, les moyens de régulation du débit 20, sensibles à un paramètre caractéristique de la charge thermique du moteur 1 (sonde 22 ou 22a), sont en outre sensibles à la pression de suralimentation $P_2$ (mesurée par une sonde de pression 25) en un point quelconque situé entre la sortie d'air 6 du compresseur 4 et l'entrée de gaz 9 de la turbine 5 et sont agencés pour agir sur le débit de combustible fourni par la buse d'alimentation 16, dans le sens de l'augmentation de ce débit jusqu'à une valeur maximale si la pression de suralimentation $P_2$ tombe au-dessous d'un seuile de pression $P_{MIN}$ et dans le sens de la réduction de ce débit jusqu'à une valeur minimale si la pression de suralimentation $P_2$ dépasse le susdit seuil $P_{MIN}$. Les moyens de régulation, sensibles au paramètre caractéristique de la charge du moteur 1 (sonde 22 ou 22a), agissent sur la valeur du seuil $P_{MIN}$.

—dans le sens de l'augmentation de ce seuil jusqu'à une valeur maximale, si ce paramètre caractéristique de la charge thermique du moteur 1 dépasse le susdit seuil $T_{MAX}$ et

—dans le sens de la diminution de ce seuil jusqu'à une valeur minimale, si ledit paramètre tombe au-dessous dudit seuil $T_{MAX}$.

Selon le mode de réalisation de la figure 2, la régulation en pression et la régulation en température se font par voie électronique, avec une régulation en cascade. A cet effet, comme dans le mode de réalisation de la figure 1, un premier comparateur 23 reçoit sur ses entrées respectivement l'information de température $T_5$ (sonde 22 ou 22a) et l'information de $T_{MAX}$ mais sa sortie est reliée non pas directement au dispositif de réglage du débit de combustible 20a, mais à un moyen de réglage 26 du seuil de pression $P_{MIN}$ en fonction du signal de sortie du comparateur 23. Un deuxième comparateur 27 reçoit sur ses deux entrées respectivement le signal de pression de suralimentation émis par la sonde 25 et le signal de seuil de pression émis par le moyen de réglage 26 et c'est la sortie de ce deuxième comparateur 27 qui est reliée au dispositif de réglage du débit 20a.

Selon un perfectionnement qui est représenté en traite mixte à la figure 2, le seuil $T_{MAX}$ est variable. A cet effet, le moteur 1 comporte avantageusement des moyens de réglage du seuil $T_{MAX}$ sensibles à la vitesse du moteur et capables d'asservir la valeur du seuil $T_{MAX}$ à la vitesse de rotation N du moteur, selon une loi donnée à l'avance:

$$T_{MAX} = f(N).$$

Ces moyens de réglage du seuil $T_{MAX}$ ont été schématisés à la figure 2 par un programmateur 28 qui reçoit sur son entrée le signal provenant d'un capteur 29 de la vitesse N du moteur et dont la sortie est reliée au générateur de signal 30 représentatif de la valeur $T_{MAX}$.

Le programmateur peut être sensible à plusieurs paramètres de fonctionnement du moteur, tels que sa vitesse de rotation N et une valeur P représentative de la pression de suralimentation $P_2$ selon une loi

$$T_{MAX} = g(N,P)$$

En effet, pour chaque valeur du couple fourni par le moteur et pour une vitesse de rotation N donnée, il existe une valeur minimale et une seule de la pression de suralimentation $P_2$ pour laquelle la température d'échappement T5 et la valeur de l'indice de fumée (opacité des gaz d'échappement) resteront toutes deux en deçà de leurs limites respectives. On peut dresser une carte $T_{MAX} = g(N,P)$ où l'on sera assuré de fournir le couple demandé sans fumée si l'on assigne à $T_{MAX}$ la valeur de T5 mesurée pour laquelle on observe un induce de fumée inférieur ou égal à une valeur maximale fixée à l'avance.

La valeur P représentative de la pression de suralimentation $P_2$ peut être la valeur d'une pression mesurée en un point quelconque situé entre la sortie d'air 6 du compresseur 4 et l'entrée de gaz 9 de la turbine 5.

La figure 3 illustre une variante du mode de réalisation de la figure 2 selon laquelle seul le comparateur de température 23 est de type électronique alors que le comparateur de pression 27 est de type mécanique ou hydro-pneumatique. Sur cette figure 3, on a représenté la zone primaire de combustion 13 de la chambre de combustion auxiliaire 14.

Comme décrit dans le FR—A—2.265.979, la zone primaire 13 est limitée par un manchon cylindrique 31 qui est mobile axialement à l'intérieur d'un manchon cylindrique coaxial fixe 32. Le manchon mobile 31 est muni d'une couronne d'orifices 33 qui coïncident, en plus ou moins grande proportion, avec des orifices 34 placés en couronne sur le machon extérieur 32. L'air de suralimentation est refoulé par le compresseur 4 à la pression $P_2$ sur la surface extérieure du manchon fixe 32. Les orifices 33 et 34 constituent ensemble les susdits moyens d'étranglement capables de répartir de débit d'air introduit dans la chambre de combustion auxiliaire 14, entre la zone primaire de combustion 13 et la zone secondaire de dilution 21.

La buse d'alimentation 16 est portée par un plongeur 35 qui coulisse dans un manchon cylindrique 36. La canalisation de refoulement 17 de la pompe à combustible 18 communique avec l'intérieur d'une aiguille creuse 37 qui est portée par le fond du manchon 36 et qui se termine par une pointe conique 38. Le canal intérieur 39 de l'aiguille creuse 37 aboutit par des orifices latéraux 40 dans une chambre 41 ménagée à l'intérieur du plongeur 35. Cette chambre 41 se raccorde, par l'intermédiaire d'un épaulement ou siège 42, à un canal intérieur 43 qui aboutit, par l'intermédiaire d'un clapet anti-retour 44, à la buse 16. L'aiguille conique fixe 38 coopérant avec le siège mobile 42 constituent ensemble le dispositif de réglage du débit de combustible 20a admis dans la buse 16.

Par ailleurs, la cavité annulaire 45 comprise entre le fond du manchon 36 et l'extrémité du plongeur 35 communique par la canalisation 46 avec la sortie de la pompe 18 à travers l'ajutage fixe 48 et avec le retour au réservoir 19 à travers l'ajutage variable 20b. On entend par "ajutage variable" tout dispositif connu permettant de faire varier le débit à travers celui-ci tel qu'ajutage de section de passage variable ou ajutage de section constante à ouverture cyclique variable. Selon l'état d'ouverture de l'ajutage variable 20b, la pression PC'1 régnant dans la cavité 45 sera comprise entre la pression PC'1 régnant à la sortie de la pompe 18 et la pression de retour PCR au réservoir 19. Cette pression PC'1 agissant sur la surface s de la face antérieure 49 du plongeur 35 viendra équilibrer la pression de suralimentation P2 s'exerçant sur la section différentielle S du soufflet 50 et du manchon 35 comme décrit dans le FR—A—2.265.979. La cavité 51 comprise entre ce soufflet 50 et le manchon 35 communique avec le réservoir à la pression PCR par la canalisation 52 et collecte les fuites de liquide entre le manchon 36 et le plongeur 35.

Lorsque l'équilibre des forces est réalisé, on

aura: $(P2-PCR)\,S = (PC'1-P2)\,s$

$$\text{Soit: } P2 = \frac{PC'1\,s + PCR\,S}{S+s}$$

Le réglage, grâce au comparateur 23, de l'ouverture de l'ajutage variable 20b permet donc de faire varier la pression de référence PC'1 et, par voie de conséquence, la pression de suralimentation P₂ jusqu'à une valeur de seuil

$$(I)—PMIN=\frac{PC'1 \; s+PCR \; S}{S+s}$$

On a bien réalisé un comparateur hydropneumatique équivalent au comparateur électronique 27 de la figure 2. Si pour un fonctionnement donné du moteur (vitesse et couple donnés), la valeur T5 du paramètre caractéristique de la charge thermique de celui-ci a tendance à dépasser la valeur de seuil $T_{MAX}$, le comparateur 23 agit sur l'ajutage variable 20b dans le sens de la fermeture.

La pression PC'1 régnant dans la cavité 45 va donc s'élever—ce qui revient à augmenter la valeur de $P_{MIN}$ selon la formule (I)—et agissant sur la face 49 du plongeur 35, a tendance a déplacer celui-ci vers la droite, ouvrant ainsi l'ajutage variable 20a. Le débit de combustible introduit dans la chambre par la buse 16 augmente, ce qui provoquera l'accélération de la turbine et l'augmentation consécutive de la pression de suralimentation P2 jusqu'à ce que l'équilibre entre P2 et $P_{MIN}$ soit à nouveau rètabli. L'augmentation ainsi obtenue de la pression d'air admis dans les chambres de travail augmentera la valeur du rapport massique entre l'air et le combustible dans celles-ci, jusqu'à ce que le paramètre T5 retombe en dessous du seuil $T_{MAX}$.

La figure 4 illustre un troisième mode de réalisation selon lequel la prise de température $T_5$ est opérée de façon multiple, en nombre égal à celui des collecteurs d'échappement, et le paramètre caractéristique de la charge du moteur est la moyenne arithmétique de ces températures.

A titre d'exemple, il a été supposé que ce moteur 101 comporte deux collecteurs d'échappement 110, correspondant respectivement à deux rangées de chambres de travail 102. Ces collecteurs 110 sont reliés tous deux à une chambre de combustion auxiliaire analogue à celle 14 des modes de réalisation précédents. On dispose alors une sonde de température 122, analogue à la sonde 22 des modes de réalisation précédents, dans chacun des collecteurs d'échappement 110. Les signaux de température $T_{51}$ et $T_{52}$ sont envoyés respectivement par les deux sondes 122 dans les moyens de calcul électroniques 123 qui effectuent la moyenne arithmétique de ces signaux et qui comparent cette moyenne au signal émis par un générateur de $T_{MAX}$ analogue au générateur 30 des modes de réalisation précédents.

Le mode de réalisation de la figure 4 se prête aisément à la prévention et à la détection d'incidents de fonctionnement.

C'est ainsi que les moyens de régulation, sensibles aux températures représentatives de la charge thermique du moteur ($T_{51}$ et $T_{52}$) peuvent être agencés de manière à effectuer la comparaison par différence de ces diverses températures et à éliminer la température la plus basse en cas de détection d'une différence dépassant un seuil déterminé et pour signaler par un message approprié la température dont la mesure est éliminée. Ceci permet de prendre les mesures nécessaires pour remédier à l'anomalie constatée (défectuosité de la sonde de température correspondante ou alimentation insuffisante en combustible de la rangée correspondante de chambres de travail 102).

Quel que soit le mode de réalisation adopté, les moyens de régulation du débit de combustible 20, sensibles au paramètre caractéristique de la charge thermique du moteur, peuvent être agencés de telle manière que, si la valeur de ce paramètre dépasse une valeur maximale supérieure au seuil $T_{MAX}$, le débit de combustible admis par la buse d'alimentation est augmenté d'autorité jusqu'à sa valeur maximale et un signal approprié est émis pour indiquer ce dépassement.

**Revendications**

1. Moteur à combustion interne (1, 101) à chambres de travail de volume variable (2, 102), suralimenté par un turbocompresseur (3) dont la sortie d'air (6) du compresseur (4) communique avec l'entrée d'air des chambres de travail (2, 102), ledit compresseur (4) étant entraîné par une turbine (5) dont l'entrée de gaz (9) est reliée à la sortie de gaz des chambres de travail (2, 102) par l'intermédiaire d'au moins un collecteur d'échappement (10, 110), lequel moteur (1, 101) comporte un conduit de dérivation (11) faisant communiquer la sortie d'air (6) du compresseur (4) avec l'entrée des gaz (5) de la turbine (9) par l'intermédiaire d'une chambre de combustion auxiliaire (14) qui est divisée d'amont en aval en une zone primaire de combustion (13) et en une zone secondaire de dilution (21) et dont la sortie de gaz (15) communique avec l'entrée (9) de la turbine (5), ladite zone primaire (13) comportant au moins une buse d'alimentation en combustible (16) reliée à une source de combustible sous pression (18) par l'intermédiaire de moyens de régulation (20) du débit de combustible admis par ladite buse (16), ces moyens (20) étant agencés de manière à agir dans le sens de l'agumentation du débit de combustible, jusqu'à une valeur maximale, si au moins un paramètre lié à la charge thermique du moteur (1, 101) dépasse un seuil déterminé à l'avance ($T_{MAX}$) et dans le sens de la réduction du débit du combustible, jusqu'à une valeur minimale, si ledit paramètre caractéristique descend auj-dessous dudit seuil ($T_{MAX}$), caractérisé en ce que ledit paramètre est constitué par l'un des suivants:

a) la température des gaz à la sortie de gaz des chambres de travail (2, 102), en amont du carrefour de la communication du conduit de dérivation (11) avec l'entrée de gaz (9) de la turbine (5);

b) la température d'au moins une pièce échauffée par les gaz de combustion dans les chambres de travail, la prise de cette température étant associée à des moyens de calcul électroniques susceptibles de prendre en compte les inerties thermiques de ladite prise de température;

c) un indice caractéristique de la composition chimique des gaz de combustion quittant les chambres de travail, en amont du carrefour de la communication du conduit de dérivation (11) avec l'entrée de gaz (9) de la turbine (5).

2. Moteur à combustion interne selon la revendication 1, caractérisé en ce que la prise de température des gaz selon a) est opérée en amont du susdit carrefour et en aval des sorties regroupées des chambres de travail (2, 102) du moteur (1, 101).

3. Moteur à combustion interne selon la revendication 1, caractérisé en ce que le susdit indice de la composition chimique selon c) est l'opacité desdits gaz de combustion en amont du carrefour de la communication du conduit de dérivation (11) avec l'entrée de gaz (9) de la turbine (5).

4. Moteur à combustion interne selon l'une quelconque des revendications 1 à 3, caractérisé en ce que les susdits moyens sont agencés de manière à agir dans le sens de l'augmentation et de la réduction du débit du combustible non pas lorsque le susdit paramètre dépasse ou descend au-dessous du susdit seuil mais lorsque ce paramètre a tendance à dépasser ou à descendre au-dessous de ce seuil.

5. Moteur à combustion interne selon l'une quelconque des revendications précédentes, caractérisé en ce que les susdits moyens de régulation (20) du débit de combustible admis par ladite buse (16) et sensibles à un paramètre lié à la charge thermique du moteur, sont constitués:

—d'un premier comparateur (23) comparant la valeur du susdit paramètre à la valeur du susdit seuil ($T_{MAX}$), et agencé pour agir sur la valeur de seuil ($P_{MIN}$) d'un deuxième comparateur (27)

. dans le sens de l'augmentation de ce seuil ($P_{MIN}$) jusqu'à une valeur maximale, si ledit paramètre dépasse ou a tendance à dépasser le susdit seuil ($T_{MAX}$).

. dans le sens de la diminution du seuil ($P_{MIN}$) jusqu'à une valeur minimale, si ledit paramètre tombe ou a tendance à tomber en dessous dudit seuil ($T_{MAX}$).

—d'un second comparateur (27) comparant à la susdite valeur du seuil ($P_{MIN}$) la pression régnant en un point quelconque situé entre la sortie d'air (6) du compresseur (4) et l'entrée de gaz (9) de la turbine (5), et agencé pour agir sur le débit de combustible admis par ladite buse (16) par l'intermédiaire de l'organe de réglage (20a).

. dans le sens de l'augmentation de ce débit, jusqu'à une valeur maximale, si la pression au susdit point tombe ou a tendance à tomber en dessous de la valeur du susdit seuil ($P_{MIN}$).

. dans le sens de la diminution de ce débit, jusqu'à une valeur minimale, si la pression au susdit point dépasse ou a tendance à dépasser la valeur du susdit seuil ($P_{MIN}$).

6. Moteur à combustion interne selon l'une quelconque des revendications précédentes, caractérisé en ce que le seuil ($T_{MAX}$) est variable.

7. Moteur à combustion interne selon la revendication 6, caractérisé en ce qu'il comporte des moyens de réglage du seuil ($T_{MAX}$) sensibles à la vitesse du moteur et capables d'asservir la valeur du seuil ($T_{MAX}$) à la vitesse de rotation (N) du moteur, selon une loi donnée à l'avance:

$$(T_{MAX})=f(N).$$

8. Moteur à combustion interne selon la revendication 6, caractérisé en ce qu'il comporte des moyens de réglage du seuil ($T_{MAX}$) sensibles à la vitesse de rotation (N) du moteur et à la pression (P) en un point quelconque situé entre la sortie d'air (6) du compresseur (4) et l'entrée de gaz (9) de la turbine (5) et capables d'asservir la valeur du seuil ($T_{MAX}$) à la vitesse de rotation (N) et à la pression (P), selon une loi donnée à l'avance

$$(T_{MAX})=g (N, P).$$

9. Moteur à combustion interne selon l'une quelconque des revendications 1 à 8, caractérisé en ce que la mesure du paramètre lié à la charge thermique du moteur est opérée de façon multiple, en nombre égal à celui des collecteurs d'échappement (110), et le paramètre utilisé est la moyenne arithmétique de ces valeurs mesurées.

10. Moteur à combustion interne selon la revendication 9, caractérisé en ce que les moyens de régulation (20) sensibles aux susdites valeurs mesurées sont agencés de manière à effectuer la comparaison par différence de ces diverses valeurs mesurées, à éliminer la valeur mesurée la plus basse en cas de détection d'une différence dépassant un seuil déterminé et à signaler par un message approprié la valeur dont la mesure est éliminée.

11. Moteur à combustion interne selon l'une quelconque des revendications 1 à 10, caractérisé en ce que les moyens de régulation du débit de combustible (20), sensibles au paramètre lié à la charge thermique du moteur (1, 101), sont agencés de telle manière que, si la valeur de ce paramètre dépasse une valeur maximale supérieure au seuil ($T_{MAX}$), le débit de combustible admis par la buse d'alimentation (16) est augmenté d'autorité jusqu'à sa valeur maximale et un signal approprié est émis pour indiquer ce dépassement.

**Patentansprüche**

1. Brennkraftmotor (1, 101) mit Arbeitskammern (2, 102) veränderlichen Volumens, die durch einen Turbokompressor (3) aufgeladen werden, dessen Kompressor (4)—Luftauslass (6) mit dem Lufteinlass der Arbeitskammern (2, 102) in Verbindung steht, welcher Kompressor (4) durch eine Turbine (5) angetrieben ist, deren Gaseinlass (9) an den Gasauslass der Arbeitskammern (2, 102) über wenigstens einen Auspuffsammler (10, 110) angeschlossen ist, welcher Motor (1, 101) eine Umgehungsleitung (11) aufweist, durch die der Luftauslass (6) des Kompressors (4) mit dem Gaseinlass (5) der Turbine (9) über eine Hilfsbrennkammer (14) verbindbar ist, die in Strömungsrichtung in eine Primärzone (13) für die Verbrennung und eine Sekundärzone (21) für die Verdünnung unterteilt ist und deren Gasauslass (15) mit dem Einlass (9) der Turbine (5) verbunden ist, wobei die Primärzone (13) zumindest eine Düse (16) für die Zufuhr von Brennstoff aufweist, die über eine Regeleinrichtung (20) für die der Düse (16) zugeführte Brennstoffmenge an eine unter Druck setzende Brennstoffquelle (18) angeschlossen ist, welche Regeleinrichtung (20) im Sinne einer Vergrösserung der Brennstoffmenge bis zu einem Maximalwert ausgebildet ist, wenn wenigstens ein mit der thermischen Belastung des Motors (1, 101) verknüpfter Parameter eine vorbestimmte Schwelle ($T_{MAX}$) überschreitet, und im Sinne einer Verminderung der Brennstoffmenge bis zu einem Minimalwert, wenn dieser charakteristische Parameter unter diesen Schwellwert ($T_{MAX}$) fällt, dadurch gekennzeichnet, dass dieser Parameter von einem der folgenden gebildet ist:

a) der Temperatur der Gase am Gasauslasse der Arbeitskammern (2, 102), stromaufwärts des Verbindungsbereiches der Umgehungsleitung (11) mit dem Gaseinlass (9) der Turbine (5);

b) der Temperatur wenigstens eines durch das Verbrennungsgas in den Arbeitskammern erhitzten Teiles, wobei der dieser Temperatur zugeordnete Fühler einer elektronischen Recheneinrichtung zur Berücksichtigung der thermischen Trägheit dieses Temperaturfühlers zugeordnet ist;

c) einem für die chemische Zusammensetzung der die Arbeitskammern verlassenden Verbrennungsgase, stromaufwärts des Verbindungsbereiches der Umgehungsleitung (11) mit dem Gaseinlass (9) der Turbine (5), charakteristischen Kennwert.

2. Brennkraftmotor nach Anspruch 1, dadurch gekennzeichnet, dass der Temperaturfühler für die Gase gemäss Merkmal a) stromaufwärts dieses Verbindungsbereiches und stromabwärts der umgruppierten Auslässe der Arbeitskammern (2, 102) des Motors (1, 101) ausgebildet ist.

3. Brennkraftmotor nach Anspruch 1, dadurch gekennzeichnet, dass der Kennwert für die chemische Zusammensetzung gemäss Merkmal c) die Opazität der Verbrennungsgase stromaufwärts des Verbindungsbereiches der Umgehungsleitung (11) mit dem Gaseinlass (9) der Turbine (5) ist.

4. Brennkraftmotor nach einem der Ansprüche 1 bis 3, dadurch gekennzeichnet, dass die Regeleinrichtung im Sinne der Vergrösserung und der Verminderung der Brennstoffmenge nicht erste dann ausgebildet ist, wenn der genannte Parameter den Schwellwert übersteigt bzw. unter ihn fällt, sondern wenn dieser Parameter schon die Neigung zum Übersteigen dieses Schwellwertes oder zum Unterschreiten desselben hat.

5. Brennkraftmotor nach einem der vorhergehenden Ansprüche, dadurch gekennzeichnet, dass die für den mit der thermischen Belastung des Motors (1, 101) verknüpften Parameter empfindliche Regeleinrichtung (20) für die zur Düse (16) zugeführte Brennstoffmenge folgende Teile aufweist:

—einen ersten Komparator (23), der den Wert des genannten Parameters mit dem Schwellwert ($T_{MAX}$) vergleicht und den Schwellwert ($P_{MIN}$), eines zweiten Komparators (27) beeinflusst, und zwar

. im Sinne einer Vergrösserung dieses Schwellwertes ($P_{MIN}$) bis zu einem Maximalwert, wenn der Parameter seinen Schwellwert ($T_{MAX}$) überschreitet oder dazu tendiert.

. im Sinne einer Verminderung des Schwellwertes ($P_{MIN}$) bis zu einem Minimalwert, wenn der Parameter unter seinen Schwellwert ($T_{MAX}$) fällt oder dazu tendiert.

—une einen zweiten Komparator (27) der mit dem genannten Schwellwert ($P_{MIN}$) den Druck an einem zwischen dem Luftauslass (6) des Kompressors (4) und dem Gaseinlass (9) der Turbine (5) gelegenen Punkte vergleicht und die der Düse (16) zugeführte Brennstoffmenge über das Regelorgan (20a) beeinflusst, und zwar

. im Sinne einer Vergrösserung der Menge bis zu einem Maximalwert, wenn der Druck an diesem Punkte unter seinen Schwellwert ($P_{MIN}$) fällt oder dazu tendiert.

. im Sinne einer Verminderung dieser Menge bis zu einem Minimalwert, wenn der Druck an diesem Punkte seinen Schwellwert ($P_{MIN}$) übersteigt oder dazu tendiert.

6. Brennkraftmotor nach einem der vorhergehenden Ansprüche, dadurch gekennzeichnet, dass der Schwellwert ($T_{MAX}$) veränderbar ist.

7. Brennkraftmotor nach Anspruch 6, dadurch gekennzeichnet, dass er Einsteller für den Schwellwert ($T_{MAX}$) besitzt, die für die Motorgeschweindigkeit empfindlich sind, und durch die der Schwellwert ($T_{MAX}$) in Abhängigkeit von der Drehgeschwindigkeit (N) des Motors nach einer gegebenen Gesetzmässigkeit

$$(T_{MAX})=f(N)$$

setzbar ist.

8. Brennkraftmotor nach Anspruch 6, dadurch gekennzeichnet, dass er Einsteller für den Schwellwert ($T_{MAX}$) besitzt, die für die Motorgeschwindigkeit und für den Druck (P) an einem Punkte zwischen dem Luftauslass (6) des Kompressors (4) und dem Gaseinlass (9) der Turbine (5) empfindlich sind, und durch die der Schwellwert ($T_{MAX}$) in Abhängigkeit von der Drehgeschwindigkeit (N) und vom Drucke (P) nach einer gegebenen Gesetzmässigkeit

$$(T_{MAX})=g (N, P)$$

setzbar ist.

9. Brennkraftmotor nach einem der Ansprüche 1 bis 8, dadurch gekennzeichnet, dass die Messung des mit der thermischen Belastung des Motors verknüpften Parameters mehrfach, in gleicher Anzahl wie die der Auspuffsammler (110), vorgenommen ist und der verwendete

Parameter des arithmetische Mittel dieser Messwerte ist.

10. Brennkraftmotor nach Anspruch 9, dadurch gekennzeichnet, dass die für die genannten Messwerte empfindliche Regeleinrichtung (20) zum Vergleich der Differenz dieser verschiedenen Messwerte, zum Ausscheiden des geringsten Messwertes im Falle der Feststellung einer eine bestimmte Schwelle überschreitenden Differenz und zum Signalisieren des ausgeschiedenen Messwertes durch eine entsprechende Information ausgebildet ist.

11. Brennkraftmotor nach einem der Ansprüche 1 bis 10, dadurch gekennzeichnet, dass die für den mit der thermischen Belastung des Motors (1, 101) verknüpften Parameter empfindliche Regeleinrichtung (20) derart ausgebildet ist, dass, beim Überschreiten eines oberhalb des Schwellwertes $(T_{MAX})$ gelegenen Maximalwertes durch den Wert dieses Parameters, die durch die Versorgungsdüse (16) zugeführte Brennstoffmenge bis zu ihrem Maximalwert vergrössert und ein entsprechendes Signal zur Anzeige dieser Überschreitung abgegeben wird.

**Claims**

1. An internal combustion engine (1, 101) having work chambers (2, 102) of variable volume, supercharged by a turbocompressor (3) whose air outlet (6) of the compressor (4) communicates with the air inlet of the work chambers (2, 102), said compressor (4) being driven by a turbine (5) whose gas inlet (9) is connected to the gas outlet of the work chambers (2, 102) through at least one exhaust manifold (10, 110), which engine (1, 101) comprises a bypass conduit (11) putting the air outlet (6) of the compressor (4) in communication with the gas inlet (5) of the turbine (9) through an auxiliary combustion chamber (14) which is divided in the upstream to downstream direction into a primary combustion zone (13) and a secondary dilution zone (21) and whose gas outlet (15) communicates with the inlet (9) of the turbine (5), said primary zone (13) comprising at least one fuel supply nozzle (16) connected to a source of fuel under pressure (18) through flow regulating means (20) for the fuel admitted by said nozzle (16), said means (20) being so arranged as to act in the direction for increasing the fuel flow up to a maximum value, if at least one parameter characteristic of the thermal load of the engine (1, 101) exceeds a predetermined threshold $(T_{MAX})$, and in the direction for reducing the fuel flow down to a minimum value, if said characteristic parameter drops below said threshold $(T_{MAX})$, characterized in that said parameter is one of the following:

a) the temperature of the gases at the gas outlet of the work chambers (2, 102), upstream of the crossing of the communication of the bypass conduit (11) with the gas inlet (9) of the turbine (5);

b) the temperature of at least one component heated by the gases of combustion in the work chambers, the taking of this temperature being associated with electronic calculating means which are capable of taking into account the thermal inertias of said taking of the temperature;

c) an index which is a characteristic of the chemical composition of the combustion gases leaving the work chambers, upstream of the crossing of the communication of the bypass conduit (11) with the gas inlet (9) of the turbine (5).

2. An internal combustion engine according to Claim 1, characterized in that the taking of the temperature of the gases in accordance with a) is effected downstream of the above mentioned crossing and upstream of grouped outlets of the work chambers (2, 102) of the engine (1, 101).

3. An internal combustion engine according to Claim 1, characterized in that said index characteristic of the chemical composition in accordance with c) is the opacity of said gases of combustion upstream of the crossing of the communication of the bypass conduit (11) with the gas inlet (9) of the turbine (5).

4. An internal combustion engine according to any one of the Claims 1 to 3, characterized in that the above mentioned means are so arranged as to act in the direction for increasing and reducing the fuel flow not if the above parameter exceeds or drops below said threshold but if said parameter has a tendency to exceed or to drop below this threshold.

5. An internal combustion engine according to any one of the preceding claims, characterized in that said flow regulating means (20) for the fuel admitted through said nozzle (16) and responsive to a parameter which is a characteristic of the thermal load of the engine, are formed:

—by a first comparator (23) which compares the value of the above mentioned parameter with the value of said threshold $(T_{MAX})$, and is adapted to act on the threshold value $(P_{MIN})$ of a second comparator (27)

in the direction for increasing said threshold $(P_{MIN})$ up to a maximum value, if said parameter of the engine exceeds, or has a tendency to exceed, said threshold $(T_{MAX})$

in the direction for decreasing the threshold $(P_{MIN})$ down to a minimum value, if said parameter drops, or has a tendency to drop, below said threshold $(T_{MAX})$.

—by a second comparator (27) which compares with said threshold value $(P_{MIN})$ the pressure prevailing at any point located between the air outlet (6) of the compressor (4) and the gas inlet (9) of the turbine (5) and is adapted to act on the flow of fuel admitted through said nozzle (16) by means of the regulating member (20a)

in the direction for increasing said flow up to a maximum value if the pressure at said point drops, or has a tendency to drop, below the value of said threshold $(P_{MIN})$.

in the direction for decreasing said flow down to a minimum value, if the pressure at said point exceeds, or has a tendency to exceed, the value of said threshold $(T_{MAX})$.

6. An internal combustion engine according to any one of the preceding claims, characterized in that the threshold ($T_{MAX}$) is variable.

7. An internal combustion engine according to Claim 6, characterized in that it comprises means for regulating the threshold ($T_{MAX}$), which are responsive to the speed of the engine and capable of causing the value of the threshold ($T_{MAX}$) to be controlled by the speed of rotation (N) of the engine, according to a predetermined law:

$$(T_{MAX})=f(N).$$

8. An internal combustion engine according to Claim 6, characterized in that it comprises means for regulating the threshold ($T_{MAX}$), which are responsive to the speed of rotation (N) of the engine and to the pressure (P) at any point located between the air outlet (6) of the compressor (4) and the gas inlet (9) of the turbine (5) and capable of causing the value of the threshold ($T_{MAX}$) to be controlled by the speed of rotation (N) and the pressure (P) according to a predetermined law:

$$(T_{MAX})=g \ (N, P).$$

9. An internal combustion engine according to any one of the Claims 1 to 8, characterized in that the measurement of the parameter characteristic of the thermal load of the engine is effected in a multiple manner, in a number equal to the number of exhaust manifolds (110), and the parameter employed is the arithmetical mean of said measured values.

10. An internal combustion engine according to Claim 9, characterized in that the regulating means (20) responsive to said measured values are adapted in such manner as to effect the comparison by difference of said various measured values, to eliminate the lowest measured value in the case of detection of a difference exceeding a given threshold and to signal by a suitable message the value whose measurement is eliminated.

11. An internal combustion engine according to any one of the Claims 1 to 10, characterized in that the fuel flow regulating means (20) responsive to the parameter characteristic of the thermal load of the engine (1, 101) are so adapted that, if the value of said parameter exceeds a maximum value higher than the threshold ($T_{MAX}$), the flow of fuel admitted through the supply nozzle (16) is increased imperatively to its maximum value and a suitable signal is delivered for indicating such an exceeding.

## Fig:1

0 153 207

Fig. 2

Fig. 4

2

Fig.3